# EUROPÄISCHE PATENTSCHRIFT

(11) **EP 1 637 441 B1**
(45) Veröffentlichungstag und Bekanntmachung des Hinweises auf die Patenterteilung: **27.06.2007**
(21) Anmeldenummer: 05020247.2
(22) Anmeldetag: 16.09.2005
(51) Int. Cl.: B62D 33/06, A47C 17/80, A47C 17/38, B60P 3/38

(54) **Verstellbare Liege**
Adjustable bunk
Couchette réglable

(30) Priorität: 17.09.2004 DE 102004045185
(43) Veröffentlichungstag der Anmeldung: 22.03.2006
(73) Patentinhaber: Isringhausen GmbH & Co. KG, 32657 Lemgo (DE)
(72) Erfinder: Wagener, Karl-Heinz, 33330 Gütersloh (DE); Schiendorfer, Andreas, 33647 Bielefeld (DE)
(74) Vertreter: DTS München

(56) Entgegenhaltungen:
- EP-A- 0 815 781
- DE-A1- 2 827 876
- FR-A- 2 174 567
- FR-A- 2 628 618
- PATENT ABSTRACTS OF JAPAN Bd. 006, Nr. 029 (M-113), 20. Februar 1982 (1982-02-20) -& JP 56 146433 A (TOKYO SEAT KK), 13. November 1981 (1981-11-13)

## Beschreibung

Die Erfindung befasst sich mit einer verstellbaren Liege, insbesondere für Lastkraftwagen und Wohnmobile, die mindestens zwei Segmente aufweist, die jeweils entlang einer Achse zwischen zwei benachbarten Segmenten miteinander gelenkig verbunden sind.

Aus der DE 42 15 111 C2 ist eine zweiteilige Schlafliege für ein Fahrerhaus eines Lastkraftwagens bekannt. Diese weist eine Teilfuge in Fahrzeugquerrichtung auf und besteht aus einer Basisliege und einem schwenkbaren, gegenüber der Fahrerhausrückwand in eine vertikale Position bringbares Schwenkteil. Im aufgerichteten Zustand bildet das Schwenkteil eine Rückenlehne, so dass die gesamte Anordnung als Sitzbank genutzt werden kann. Das Schwenkteil ist als einteiliger, etwa U-förmiger, die Basisliege an ihrer Vorderseite und an ihren Breitseiten umgebender, in der Nähe der Fahrerhausrückwand angelenkter Bügel ausgebildet. Im aufgerichteten Zustand stützt sich dieser Bügel an der Fahrerhausrückwand ab. Bei hochgeschwenktem Bügel kann die Basisliege um einen vorbestimmten Betrag aus einem Schacht in der Fahrerhausrückwand herausgezogen werden. Eine solche Liege nimmt jedoch bei hochgeklapptem Schwenkteil, d. h. wenn sie nicht als Liege benutzt wird, einen erheblichen Platz ein. Insbesondere bei Liegen, die auch für zwei Personen geeignet sein sollen, ist der Platzbedarf im nicht als Liege genutzten Zustand enorm.

Aus der FR 2 628 618 A1 ist ein Schrankbett gemäß dem Oberbegriff des Anspruchs 1 bekannt, welches eine Liegefläche aufweist, die im ausgezogenen Zutand horizontal und im eingeschobenen Zustand vertikal verläuft. Die Liegefläche ist in vier Segmente aufgeteilt, an deren jeweiliger Stoßkante auf jeder Seite eine Führungsrolle angeordnet ist. Diese Führungsrollen werden beim Übergang vom horizontalen Zustand in den vertikalen Zustand in eine Führungsschiene gezogen, so dass die Liegefläche in ihrem vertikalen Zustand fixiert ist. Im ausgezogenen Zustand, d.h. bei horizontaler Ausrichtung der Liegefläche, liegt die Liegefläche auf einer ausziehbaren Unterlagen auf. Die Laufrollen stehen dabei frei über die Seitenflächen der Liegefläche heraus.

Aufgabe der Erfindung ist es deshalb, eine verstellbare Liege vorzustellen, die wenig Platz benötigt und in ihrer horizontalen Position keinem Auffalten ausgesetzt ist.

Die Aufgabe wird durch eine verstellbare Liege mit den Merkmalen des Patentanspruchs 1 gelöst. Dadurch, dass die mindestens zwei Segmente, die jeweils eine Liegefläche aufweisen, in eine vertikale Position verschiebbar sind, benötigt die Liege in der zeit, in der sie nicht zum Liegen benutzt wird, so gut wie keinen Platz. Sie befindet sich mehr oder weniger in einer vertikalen Ebene. Insbesondere in Kabinen von Lastkraftwagen oder Wohnmobilen ist dies unbedingt erforderlich, um genügend Platz zu haben, um andere Tätigkeiten zu verrichten bzw. andere Gegenstände in dem nur spärlich vorhandenen Raum zu nutzen. Die mindestens zwei Segmente können zum Liegen in eine horizontale Position gebracht werden, in der sie eine Ebene bilden. Um die Segmente zwischen der horizontalen Position und der vertikalen Position zu verschieben, sind senkrecht zu der Achse, über die die einzelnen Segmente gelenkig miteinander verbunden sind, an beiden Stirnseiten jeweils ein Führungselement angebracht. Diese können beispielsweise an den Seitenwänden der Kabine eines Lastkraftwagens oder zwischen zwei Schrank- bzw. Wandelementen in einem Wohnmobil angebracht sein. Zur Führung der Segmente sind an ihren, den Führungselementen zugewandten Seitenflächen Lagerelemente angeordnet. Die Führungselemente weisen jeweils einen im Wesentlichen vertikalen Teil auf, in dem die Segmente angeordnet sind, wenn sie sich in dem nicht benutzten Zustand befinden, und jeweils einen im Wesentlichen horizontalen Teil, in dem die Segmente in der Liegeposition sind. Dadurch ist es in einfacher Art und Weise möglich, die verstellbare Liege von ihrer Liegeposition - die Segmente befinden sich in einer im Wesentlichen horizontalen Position - in ihre Stauposition - die Segmente befinden sich in einer im Wesentlichen vertikalen Position - hin und her zu verschieben. Um die Sicherheit zu gewährleisten, sind die Segmente sowohl in ihrer vertikalen Position als auch in ihrer horizontalen Position an den Führungselementen festlegbar. Dadurch, dass der horizontale Teil der Führungselemente jeweils als Laufschiene ausgebildet ist und die Lagerelemente der Segmente Laufrollen oder Gleitlager sind, die in der horizontalen Position in der Laufschiene geführt werden, wird gewährleistet, dass die sich in der horizontalen Position befindlichen Segmente in vertikaler Richtung spielfrei gehalten werden. Dadurch ist beispielsweise ein Auffalten der Liegefläche, die durch die in der horizontalen Position befindlichen Segmente gebildet wird, ausgeschlossen. Somit sind keine zusätzlichen Vorrichtungen nötig, um die Liege in ihrer Liegeposition festzulegen. Im Rahmen der vorliegenden Anmeldung wird unter einem im Wesentlichen rechteckigen Segment ein Segment verstanden, das eine Kante aufweist, die senkrecht zur Ebenen der Führungselemente steht. Normalerweise sind die Seitenkanten parallel zueinander und parallel zur Ebene der Führungselemente ausgebildet. Dies ist jedoch nicht zwingend der Fall. So kann eine oder beide Seitenkanten in dem Bereich über den Lagerelementen auch eine beliebige Form aufweisen, beispielsweise über die Führungselemente (teilweise) herausstehen. Die Vorderkante eines Segments ist gerade ausgebildet oder so, dass die Hinterkante des benachbarten Segments invers dazu ausgebildet ist, so dass beim Abknicken entlang der Achse keine Behinderung der beiden Kanten vorliegt. Für das erste Segment gilt, dass seine Vorderkante beliebig ausgebildet sein kann; genauso wie die Hinterkante des die Liege am anderen Ende abschließende Segments, da dieses keine benachbarte Kante aufweisen.

Eine vorteilhafte Weiterbildung der Erfindung sieht vor, dass eine Zwischenposition vorhanden ist, in der sich mindestens ein Segment in der horizontalen Position und mindestens ein Segment in der vertikalen Position befindet, wobei die Liege in dieser Zwischenposition festlegbar ist. Dadurch ist es möglich, dass die Liege nicht nur in ihrer Stauposition mit vertikal angeordneten Segmenten und in ihrer Liegeposition mit horizontal angeordneten Segmenten genutzt werden kann. Es ist damit möglich, dass durch die Zwischenposition eine schmale Liegefläche gegeben ist, die für eine Person ausreicht. Wobei in ihrer Endposition mit vollkommenen horizontal angeordneten Segmenten die Liegefläche so breit ist, dass zwei Personen auf ihr Platz finden. Bei einer anderen Unterteilung oder bei mehrfachen Unterteilungen mit mehreren Segmenten ist es auch möglich, die Tiefe der sich in der horizontalen Position befindlichen Segmente der Liege so zu bestimmen und diese auch festzulegen, dass ein angenehmes Sitzen auf dem in horizontaler Position angeordneten Segment bzw. Segmenten möglich ist. Dadurch wird eine sehr hohe Flexibilität für den Nutzer der Liege gewährleistet, da dieser zwischen der Stauposition, einer Sitzposition, einer Liegeposition für eine Person und einer Liegeposition für zwei Personen wählen kann.

Eine weitere vorteilhafte Weiterbildung der Erfindung sieht vor, dass der vertikale Teil der Führungselemente jeweils als Laufschiene ausgebildet ist und die Lagerelemente der Segmente Laufrollen oder Gleitlager sind, die in der vertikalen Position in der Laufschiene geführt werden. Dadurch wird erreicht, dass die sich in ihrer vertikalen Position befindenden Segmente in sehr einfacher Art und Weise in horizontaler Richtung nicht verschoben werden können. Damit ist u. a. auch ein sicheres Verstauen der Liege in ihrer Stauposition möglich, ohne dass zusätzliche Haltemittel nötig sind.

Eine weitere vorteilhafte Weiterbildung der Erfindung sieht vor, dass jedes Führungselement einstückig ausgebildet ist und zwischen horizontalem Teil und vertikalem Teil ein gebogener Teil der Laufschiene ausgebildet ist. Dies stellt eine besonders einfach herzustellende Möglichkeit für ein Führungselement dar, die darüber hinaus verhindert, dass die Segmente, die von ihrer horizontalen Position in ihre vertikale Position - oder umgekehrt - verschoben werden, aus dem Führungselement herausspringen. Es ist somit eine exakt definierte Führung der einzelnen Segmente gewährleistet.

Eine weitere vorteilhafte Weiterbildung der Erfindung sieht vor, dass jedes Segment an jeder dem jeweiligen Führungselement zugewandten Seitenfläche genau ein Lagerelement aufweist. Da jedes Segment sowohl links als auch rechts in dem jeweiligen Führungselement gelagert ist, kann ein Ausscheren eines Segments, beispielsweise in Form eines Auffaltens, nicht erfolgen. In der horizontalen Position bedeutet dies, dass eine glatte Liegefläche erhalten wird und auch erhalten bleibt.

Eine weitere vorteilhafte Weiterbildung der Erfindung sieht vor, dass zwischen zwei benachbarten Segmenten an jeder dem jeweiligen Führungselement zugewandten Seitenfläche genau ein Lagerelement angeordnet ist. Dies ist insbesondere bei einer Unterteilung in wenige Segmente, beispielsweise nur zwei große Segmente, vorteilhaft, da dann im Bereich des Übergangs zwischen vertikalem Teil und horizontalem Teil des Führungselements eine genau definierte Bewegung der Achse zwischen zwei benachbarten Segmenten gegeben ist. Ein Ausbrechen von dieser definierten Bahn wird damit verhindert.

Eine weitere vorteilhafte Weiterbildung der Erfindung sieht vor, dass neben dem ersten Segment genau noch ein weiteres Segment vorhanden ist, das Führungselement als eine Doppelschiene ausgebildet ist, die Laufrolle des ersten Segments im horizontalen Teil einer Laufschiene angeordnet ist, die Laufrolle des weiteren Segments im vertikalen Teil einer Laufschiene angeordnet ist und die beiden Teile stumpf aufeinander stoßen, die Zwischenlaufrolle in einer durchgängigen Laufschiene, die auf die andere Laufschiene aufgesetzt ist, angeordnet ist. Dadurch wird eine Pendel- oder Faltbewegung der Liegefläche in der Liegeposition selbst bei Körperbewegungen (insbesondere im Schlaf) verhindert, da die letzte Rolle - die dem weiteren Segment zugeordnet ist - im vertikalen Teil der Laufschiene angeordnet ist und somit nicht in horizontaler Richtung ausweichen kann.

Eine weitere vorteilhafte Weiterbildung der Erfindung sieht vor, dass die Laufrolle des ersten Segments in der vertikalen Position der Liege am linken Anschlag des horizontalen Teils der Laufschiene anschlägt und die Laufrolle des ersten Segments in der horizontalen Position der Liege am rechten Anschlag des horizontalen Teils der Laufschiene und/oder die Laufrolle des zweiten Segments am unteren Anschlag des vertikalen Teils der Laufschiene anschlägt. Dadurch ist ein Startimpuls nötig, damit sich die Liege von ihrer Stauposition in die Liegeposition bewegt. Dies trägt zur Sicherheit der Liege bei. Natürlich benötigt man auch eine Kraft, um die Liege aus ihrer Liegeposition in ihre Stauposition zu bringen, da gegen die Schwerkraft angegangen werden muss.

Eine weitere vorteilhafte Weiterbildung der Erfindung sieht vor, dass die Segmente auf ihrer Liegefläche durchgängig miteinander verbunden sind, so dass eine einheitliche, durchgängige Liegefläche in der horizontalen Position gegeben ist. Dadurch ist es möglich, ein durchgängiges Polster für die gesamte Liegefläche zu verwenden, so dass keine Fugen zwischen den einzelnen Segmenten vorhanden sind. Dies erhöht den Liegekomfort.

Eine weitere vorteilhafte Weiterbildung der Erfindung sieht vor, dass die der Liegefläche abgewandte Rückfläche Schlitze aufweist, die parallel zur Hinterkante des ersten Segments ausgebildet sind. Dadurch wird in sehr einfacher Art und Weise der Übergang zwischen dem horizontalen Teil und dem vertikalen Teil der Führungselemente für die Segmente vereinfacht. Die der Liegefläche abgewandte Fläche müsste ansonsten gedehnt werden, da sie im Knick auf einem weiter außen liegenden Radius läuft.

Eine weitere vorteilhafte Weiterbildung der Erfindung sieht vor, dass an der Vorderfläche des ersten Segments eine Nut mit Hinterschneidung parallel zur Achse ausgebildet ist. Dadurch ist es möglich, an der Vorderfläche des ersten Segmentes zusätzliche Gegenstände in sehr einfacher Art und Weise anzubringen, indem diese seitlich in die Nut eingeschoben werden und einen Befestigungsfuß aufweisen, der in die Hinterschneidung der Nut eingreift. Damit ist für den Nutzer die Möglichkeit gegeben, in modularer Art und Weise beispielsweise eine Leselampe, eine Sicherung gegen Herunterfallen von der Liege, einen Ablagetisch usw. dort anzubringen. Insbesondere ist es vorteilhaft, wenn die Nut Teil einer Profilleiste ist, die das erste Segment abschließt.

Eine weitere vorteilhafte Weiterbildung der Erfindung sieht vor, dass die Profilleiste Teil eines Profilrahmens, insbesondere eines Modulrahmens, ist. Dadurch ist es möglich, die einzelnen Segmente in einem Profilrahmen einzufassen und ihm somit Steifigkeit zu verleihen. Bei einem Modulrahmen ist es in sehr einfacher Art und Weise möglich, den Rahmen den unter Umständen unterschiedlichen Größen der einzelnen Segmente anzupassen.

Eine weitere vorteilhafte Weiterbildung der Erfindung sieht vor, dass die Segmente mit einer Seilwinde, einer Gewindespindel oder einem Kettentrieb verbunden sind. Insbesondere bei Segmenten, die sehr schwer sind, ist es dadurch einfacher, diese in ihre vertikale Position zu bringen. Zusätzlich oder alternativ kann dies auch mittels eines Motors erfolgen, der die Segmente über geeignete Vorrichtungen bewegt. Genauso gut ist es möglich, andere Antriebe zu verwenden.

Weitere Vorteile und Einzelheiten der Erfindung werden anhand der in den Figuren dargestellten Ausführungsbeispiele im Folgenden beschrieben. Es zeigen im Einzelnen:
- Figur 1a-c: ein erstes Ausführungsbeispiel einer erfindungsgemäßen verstellbaren Liege mit zwei Segmenten in drei unterschiedlichen Positionen,
- Figur 2a-b: ein zweites Ausführungsbeispiel einer erfindungsgemäßen verstellbaren Liege mit zwei Segmenten mit einer Doppelschiene,
- Figur 3a-d: ein drittes Ausführungsbeispiel einer erfindungsgemäßen verstellbaren Liege mit einer Vielzahl von Segmenten in vier unterschiedlichen Positionen,
- Figur 4: eine Profilleiste als Abschluss der Vorderfläche des ersten Segments mit verschiedenen lösbar anbringbaren Modulen und
- Figur 5: einen Modulrahmen aus Profilleisten gemäß der Figur 4 in Form einer Explosionszeichnung.

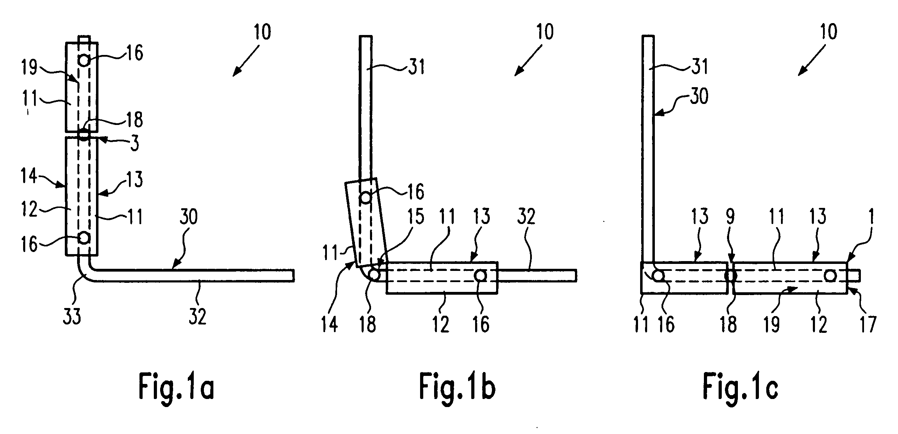

In den Figuren 1a-c sind drei verschiedene Positionen eines ersten Ausführungsbeispiels einer erfindungsgemäßen verstellbaren Liege 10 dargestellt. Es ist jeweils ein Schnitt senkrecht zu den Segmenten 11, 12 dargestellt. Dies bedeutet, dass sich in einer Ebene parallel zur Zeichenebene ein weiteres Führungselement 30 befindet, bis zu dem sich die beiden dargestellten Segmente 11, 12 erstrecken. Die dargestellte Liege 10 weist insgesamt zwei Segmente 11, 12 auf. Als erstes Segment 12 wird hier das Segment 11 bezeichnet, das in der horizontalen Position der Segmente 11, 12 (siehe Figur 1c) das am weitesten vorne (in der Darstellung rechts) befindliche Segment 11 ist. Die dargestellte Liege 10 kann beispielsweise in der Fahrerkabine eines Lastkraftwagens angeordnet sein. Dann verläuft regelmäßig links der beiden Segmente 11, 12 in Figur 1a vertikal eine Rückwand (nicht dargestellt) der Fahrzeugkabine. Genauso gut kann die Liege auch in einem Wohnmobil oder ähnlichem angeordnet sein. Darüber hinaus ist die Erfindung auch in Wohnungen ausführbar.

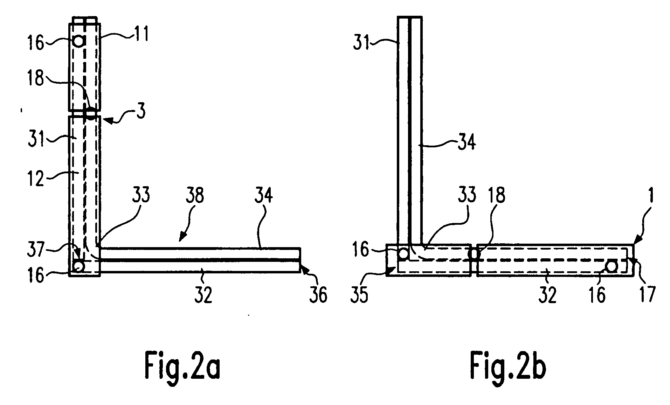

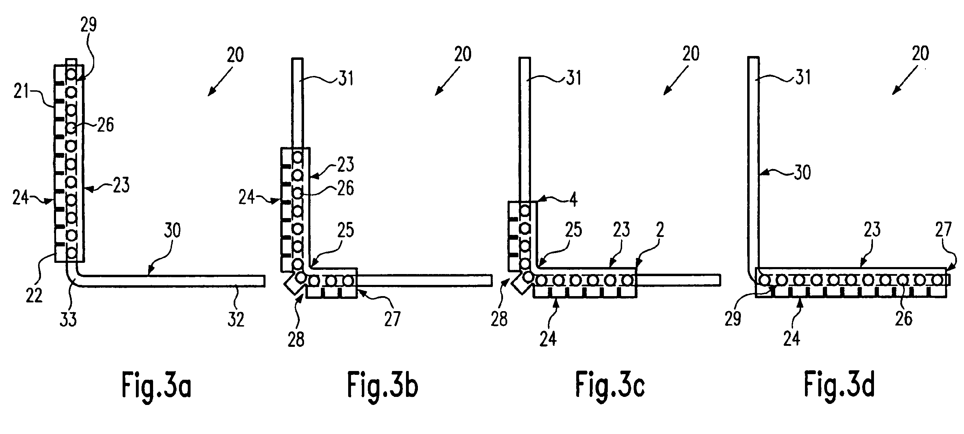

Die beiden Segmente 11, 12 weisen jeweils eine Liegefläche 13 und eine Rückfläche 14 auf. An ihren Seitenflächen 19, die jeweils einem Führungselement 30 zugewandt sind, befindet sich jeweils ein Lagerelement 16. Im dargestellten Ausführungsbeispiel sind die Lagerelemente 16 als Laufrollen ausgebildet, so dass im Folgenden nur noch von Laufrollen 16 gesprochen wird; dasselbe gilt für die Lagerelemente 26 der Figuren 2a-b und 3a-d. Anstatt Laufrollen 16 ist es genauso möglich, Gleitlager oder andere Lagerelemente vorzusehen, die ohne viel Reibung am Führungselement bewegt werden können. Als Führungselement 30 ist eine Laufschiene dargestellt, so dass im Folgenden immer nur noch von einer Laufschiene 30 gesprochen wird. Anstatt einer Laufschiene 30 ist es genauso gut möglich, jede andere Art von Führungselement 30 vorzusehen, das mit einem entsprechenden Lagerelement 16 so zusammenwirkt, das eine gute Führung dieses Lagerelements 16 bei gleichzeitig geringer Reibung ermöglicht wird. Die Laufschiene 30 ist an einer Seitenwand der Fahrerkabine eines Lkws (nicht gezeigt) angeordnet. Die nicht dargestellte zweite Laufschiene 30 ist ebenfalls an einer Seitenwand der Fahrerkabine, nämlich der gegenüberliegenden Seitenwand angeordnet. Genauso gut ist es möglich - dies gilt insbesondere, wenn die erfindungsgemäße Liege 10 in einem Wohnmobil angeordnet ist -, dass eine oder beide Laufschienen 30 an einem Schrankelement oder einem Wandelement angeordnet sein können.

Die Laufschiene 30 weist einen vertikalen Teil 31 und einen senkrecht dazu angeordneten horizontalen Teil 32 auf. Diese beiden Teile sind über einen gebogenen Teil 33 miteinander verbunden, so dass eine einstückige Laufschiene 30 gegeben ist. In dieser Laufschiene 30 laufen die an der jeweiligen Seitenfläche 19 angeordneten Laufrollen 16 der Segmente 11, 12. Dasselbe gilt auch für die Zwischenlaufrollen 18. Jedem der beiden Segmente 11, 12 ist jeweils auf jeder Seitenfläche 19 genau eine Laufrolle 16 zugeordnet. Die beiden Segmente 11, 12 sind über nicht dargestellte Verbindungsmittel, die über die Zwischenlaufrolle 18 angeordnet sind, mittelbar miteinander verbunden. Bei den beiden Segmenten 11, 12 handelt es sich um im Wesentlichen bekannte Elemente, die auf ihrer Liegefläche 13 gepolstert und auf ihrer Rückfläche 14 nicht gepolstert sind. Es versteht sich von selbst, dass auch die Rückfläche 14 gepolstert sein kann. Da die genaue Zusammensetzung bzw. Ausgestaltung der Segmente 11, 12 nicht erfindungswesentlich ist, wird im Folgenden nicht näher darauf eingegangen.

In Figur 1a sind beide Segmente 11, 12 in ihrer vertikalen Position dargestellt und befinden sich im vertikalen Teil 31 der Laufschiene 30. Die beiden Liegeflächen 13 bilden eine Ebene. Dies ist jedoch keinesfalls zwingend, es wäre auch möglich, dass die Laufschiene 30 in ihrem oberen Teil leicht abgeknickt ist. Die dargestellte Position entspricht einer Stauposition, in der die Liege 10 einen möglichst kleinen Platz benötigt, so dass in der Fahrerkabine bzw. dem Wohnmobil oder auch einer Wohnung viel Platz zur Verfügung steht, um andere Tätigkeiten auszuüben oder andere Gegenstände dort aufzustellen.

In Figur 1b ist die Liege 10 in einer Zwischenposition dargestellt, in der das erste Segment 12 in seiner horizontalen Position innerhalb des horizontalen Teils 32 der Laufschiene 30 angeordnet ist. Dagegen befindet sich das Segment 11 mit seinem Lagerelement 16 noch im vertikalen Teil 31 der Laufschiene 30. Dadurch ist die Liegefläche 13 dieses Segments 11 im Wesentlichen noch in einer vertikalen Ebene, wobei diese jedoch schon leicht geneigt ist. In der dargestellten Position weist die Liege 10 eine Tiefe auf, die Platz für eine Person zum Liegen senkrecht zur Zeichenebene bietet. Die Tiefe des ersten Segments 12 (in der Darstellung von seinem linken zum rechten Ende) beträgt beispielsweise 80 cm.

Die Liege 10 wurde von ihrer in Figur 1a dargestellten Stauposition in die in Figur 1b dargestellte Zwischenposition, die einer ersten Liegeposition entspricht, durch ein Verschieben der beiden Segmente 11, 12 erreicht. Hierfür wurde das erste Segment 12 mittels eines hierfür geeigneten Mechanismus oder eines Motors (beides nicht dargestellt) nach unten bewegt. Die Laufrolle 16 des ersten Segments 12 durchlief hierbei den gebogenen Teil 33 der Laufschiene 30, so dass seine Liegefläche 13 von einer vertikalen Ebene in eine horizontale Ebene gelangte. Die beiden Segmente 11, 12 schwenken dabei zu einer senkrecht zur Zeichenebene stehenden Achse 15, die parallel zu der zwischen den beiden Segmenten 11, 12 ausgebildeten Fuge 9 (siehe Figur 1c) verläuft. Die Zwischenlaufrolle 18, die sich zwischen dem ersten Segment 12 und dem Segment 11 befindet, ist in der Zwischenposition gerade innerhalb des gebogenen Teils 33 der Laufschiene 30 angeordnet.

Wird eine noch größere Liegefläche, beispielsweise für zwei Personen benötigt, so wird auch noch das Segment 11 aus seiner in Figur 1b dargestellten vertikalen Position in seine in Figur 1c dargestellte horizontale Position gebracht. Hierfür wird das erste Segment 12 mit seiner Laufrolle 16 weiter nach rechts innerhalb der Laufschienen 30 bewegt. Dadurch gelangt die Zwischenrolle 18 aus dem gebogenen Teil 33 in den horizontalen Teil 32 der Laufschiene 30. In der in Figur 1c dargestellten Endposition, also einer Liegeposition für zwei Personen, befindet sich die Laufrolle 16, die dem Segment 11 zugeordnet ist, im gebogenen Teil 33 der Laufschiene 30. Die beiden Liegeflächen 13 der Segmente 11, 12 bilden eine einzige horizontale Ebene, die lediglich von einer zwischen den beiden Segmenten 11, 12 ausgebildeten Fuge 9 unterteilt wird. Die Tiefe der gesamten Liegefläche wird dabei um die Tiefe des Segments 11, beispielsweise 60 cm, vergrößert. Es ergibt sich dann beispielsweise eine gesamte Tiefe zum Liegen von 140 cm, was für zwei Personen ausreichend ist.

In den Figuren 2a-b ist ein anderes Ausführungsbeispiel einer erfindungsgemäßen Liege 10 dargestellt, die aus zwei Segmenten 11, 12 ausgebildet ist. Im Folgenden wird nur auf die Unterschiede zum ersten Ausführungsbeispiel der Figuren 1a-c eingegangen. Es liegt eine dreigeteilte Doppellaufschiene 38 vor. Die Laufrollen 16 der beiden Segmente 11, 12 laufen in einer zweigeteilten ersten Laufschiene. Die Laufrolle 16 des ersten Segments 12 läuft in einer horizontalen Schiene, die den horizontalen Teil 32 bildet. Die Laufrolle 16 des weiteren Segments 11 läuft in einer vertikalen Schiene, die den vertikalen Teil 31 bildet, und schlägt stumpf an der horizontalen Schiene an. Auf diesen beiden Schienen ist eine durchgängige, gebogene zweite Laufschiene34 angebracht, in der die Zwischenlaufrolle 18 angeordnet ist.

In der in Figur 2a dargestellten Stauposition, in der die Liegefläche vertikal steht, schlägt die Laufrolle 16 des ersten Segments 12 am hinteren Anschlag 35 (in der Darstellung links) des horizontalen Teils 32 an. Aufgrund der Schwerkraft und der Hebelverhältnisse wird die Zwischenrolle 18 nach rechts gegen die zweite Laufschiene 34 gedrückt und die Laufrolle 16 des ersten Segments 12 nach links gegen den hinteren Anschlag 35. Somit kann eine Bewegung in die Liegeposition der Figur 2b nur nach einem Impuls von außen erfolgen, so dass die Rolle 16 des ersten Segments 12 über einen Totpunkt nach rechts bewegt wurde. Die Liege 10 ist somit in Ihrer Stauposition sicher gehalten.

In der in Figur 2b dargestellten Liegeposition ist die Laufrolle 16 des weiteren Segments 11 in der vertikalen Laufschiene nach unten gewandert und schlägt dort an einem unteren Anschlag 37 an. Gleichzeitig schlägt die Laufrolle 16 des ersten Segments 12, die sich innerhalb der horizontalen Laufschiene nach rechts bewegt hat, am vorderen Anschlag der horizontalen Schiene an. Es reicht allerdings aus, wenn nur einer der beiden vorgenannten Anschläge erreicht wird. In der dargestellten Liegeposition kann die Liegefläche nicht durch Körperbewegungen (beispielsweise im Schlaf) in eine Pendel- oder Faltbewegung versetzt werden, da die Laufrolle 16 des weiteren Segments 11 in der vertikalen Schiene nicht horizontal ausweichen kann und ein auch in vertikaler Richtung nur bei einem Impuls in diese Richtung eine Bewegung erfolgen kann. Eine platzsparende Aufbewahrung der Liege 10 ist auch durch dieses Ausführungsbeispiel gegeben. Es versteht sich von selbst, dass die Liege 10 auch eine Zwischenposition, wie in Figur 1b dargestellt, einnehmen kann.

In den Figuren 3a-d ist ein zweites Ausführungsbeispiel einer erfindungsgemäßen Liege 20 in vier unterschiedlichen Positionen dargestellt.

Die Liege 20 weist - wie diejenige der Figuren 1a-c - wiederum zwei Laufschienen 30 (auch hier nur eine dargestellt) auf, die sich an den Seitenwänden der Fahrerkabine bzw. Schrank- oder Wandmodulen eines Wohnmobils oder einer Wohnung befinden. Die Liege 20 weist insgesamt elf Segmente 21, 22 auf, von denen jedem wieder jeweils an der jeweiligen Seitenfläche 29 eine Laufrolle 26 zugeordnet ist. Diese Laufrollen 26 sind - wie auch in den Figuren 1a-c - in der Laufschiene 30 gelagert. Im Unterschied zum ersten Ausführungsbeispiel der Liege 10 der Figuren 1a-c sind die Segmente 21, 22 nicht voneinander getrennt, sondern durchgängig ausgebildet. Dies gilt lediglich hinsichtlich ihrer einheitlichen durchgängigen Liegefläche 23. Auf ihrer Rückfläche 24 ist zwischen benachbarten Segmenten 21, 22 jeweils ein Schlitz 28 parallel zur Vorderfläche 27 des ersten Segments 22, also senkrecht zur Tiefe der Liegefläche 23 im horizontalen Zustand, ausgebildet.

In Figur 3a ist die Liege 20 in ihrem Stauzustand (entsprechend den Figuren 1a und 2a) dargestellt.

Sämtliche Laufrollen 26 befinden sich innerhalb des vertikalen Teils 31 der Laufschiene 30.

Um zur in Figur 3b dargestellten ersten Zwischenposition zu gelangen, wird das erste Segment 22 und zwei weitere Segmente 21 mit ihren zugeordneten Laufrollen 26 durch den gebogenen Teil 33 in den vertikalen Teil 31 der Laufschiene 30 bewegt. Dadurch befindet sich das vierte Segment 21 im gebogenen Teil 33 der Laufschiene 30. Die restlichen sieben Segmente 21 befinden sich in dem vertikalen Teil 31 der Laufschiene 30, so dass deren Liegefläche 23 in einer vertikalen Ebene verläuft. Die Tiefe der Liegefläche 23 der im horizontalen Teil 32 der Laufschiene 30 angeordneten Segmente 22, 21 ist so gewählt, dass ein bequemes Sitzen möglich ist. Beispielsweise beträgt die Tiefe 40 cm. Darüber hinaus kann man sich auch noch bequem an die in der vertikalen Ebene befindlichen weiteren Segmente 21 anlehnen.

In Figur 3c ist eine zweite Zwischenposition dargestellt, in der ein Liegen für eine Person möglich ist. Diese zweite Zwischenposition entspricht der in Figur 1b dargestellten. Sie wird durch ein weiteres Bewegen des ersten Segments 22 nach rechts erreicht. Dadurch gelangen noch weitere Segmente 21 durch den gebogenen Teil 33 in den horizontalen Teil 32 der Laufschiene 30. Hierbei wird eine Tiefe der in der horizontalen Ebene liegenden Liegefläche 23 von beispielsweise 80 cm erreicht.

Die in Figur 3d dargestellte Endposition der Liege 20 entspricht der Darstellung der Figuren 1c und 2b. Hier befinden sich sämtliche Segmente 21, 22 in ihrer horizontalen Position, so dass eine durchgängige Liegefläche 23 ausbildet ist, die sich über sämtliche Segmente 21, 22 erstreckt. Deren Tiefe beträgt beispielsweise 140 cm, so dass problemlos zwei Personen auf ihr liegen können.

Sowohl in dieser Endposition als auch in der in Figur 3a dargestellten anderen Endposition sind die Schlitze 28 auf der Rückfläche 24 vollständig geschlossen, da sich sämtliche Segmente 21, 22 innerhalb einer Ebene befinden. Die Schlitze 28 sind nur während des Übergangs, wenn sich sowohl einige Segmente 21, 22 in ihrer horizontalen und andere in ihrer vertikalen Position befinden, nötig und geöffnet. Dies ergibt sich daraus, dass die Rückfläche 24 einen weiteren Bogen auf einem Zylinder beschreiben muss als dies die Liegefläche 23 tut. Es wäre auch möglich, dass die Segmente 21, 22 im Bereich ihrer Rückfläche 24 aus einem stark elastisch verformbaren Material bestehen. Die Schlitze 28 zwischen zwei benachbarten Segmenten 21, 22 wären dann nicht nötig.

Die dargestellte Ausführungsform mit elf Segmenten 21, 22 ist nur exemplarisch. Für den Fachmann ist es klar, dass die Liege 20 auch in eine beliebige andere Zahl von Segmenten 21, 22 unterteilt werden kann. Diese Zahl kann an die jeweils benötigten Bedürfnisse angepasst werden.

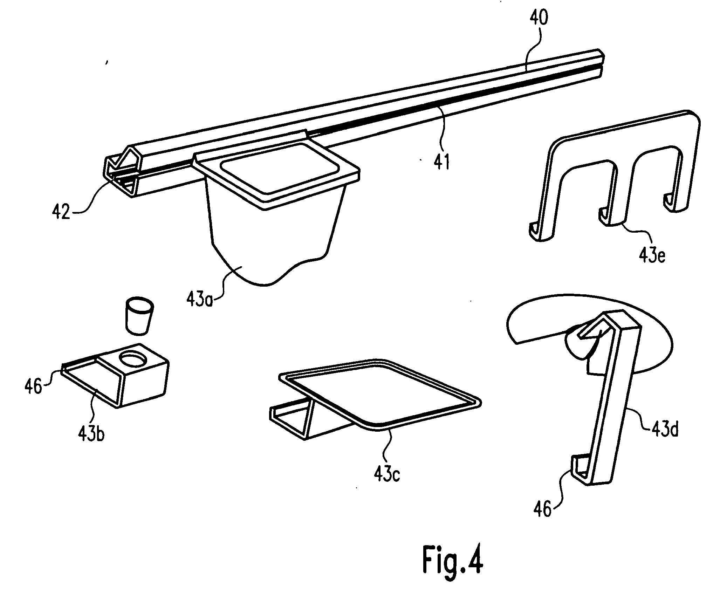

In Figur 4 ist eine Profilleiste 40 dargestellt, wie sie an der Vorderfläche 17, 27 (siehe Figuren 1a-c, 2a-b und Figuren 3a-d) angebracht sein kann. Dadurch ist es möglich, dass in den Positionen, in denen ein Sitzen oder Liegen auf der Liegefläche 13, 23 der Liege 10, 20 möglich ist, modulare Elemente 43 angebracht werden können. Bei diesen modularen Elementen 43 handelt es sich beispielsweise um einen Abfallbehälter 43a, einen Cupholder 43b, einen Ablagetisch 43c, eine Leselampe 43d oder eine Sicherung gegen Herunterfallen 43e. Jedes dieser modularen Elemente 43 weist einen Befestigungsfuß 46 auf, der innerhalb einer parallel zur Profilleiste 40 verlaufenden Nut 41 von der Seite her in eine Hinterschneidung 42 eingeführt werden kann. Die Person, die auf der Liegefläche 13, 23 (siehe Figuren 1, 2 und 3) liegt, kann somit unter einem oder mehreren der modularen Elemente 43 wählen, je nachdem, welches sie gerade benötigt. Die modularen Elemente 43 können an der Vorderfläche 17, 27 (siehe Figuren 1, 2 und 3) beliebig angeordnet und verschoben werden, so dass sie jeweils an die benötigte Stelle gebracht werden können. Es ist auch möglich, mehrere der dargestellten modularen Elemente 43 oder weitere, nicht dargestellte modulare Elemente an der Profilleiste 40 anzuordnen.

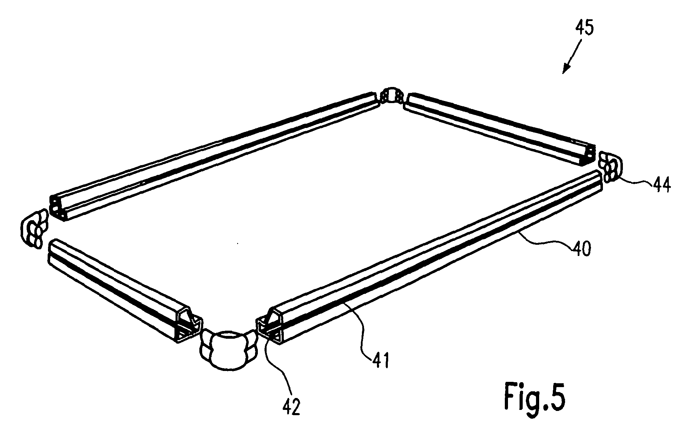

In Figur 5 ist eine Explosionszeichnung eines Profilrahmens 45 dargestellt, der aus vier Profilleisten 40 gemäß Figur 4 zusammengesetzt ist, wobei diese Profilleisten 40 über Verbindungsstücke 44 an ihren Ecken miteinander verbunden sind. Ein solcher steifer Profilrahmen 45 macht nur Sinn für voneinander getrennte Segmente 11, 12 gemäß den Figuren 1a-c. Für die in den Figuren 3a-d dargestellten einstückig ausgebildeten Segmente 21, 22 kann dieser Profilrahmen nicht verwendet werden. Der Profilrahmen 45 umschließt die in den Figuren 1a-c dargestellten einzelnen Segmente 11, 12 jeweils vollständig.

### Bezugszeichenliste

- 1, 3: Vorderkante
- 2, 4: Hinterkante
- 9: Fuge
- 10, 20: Liege
- 11, 21: Segment
- 12, 22: erstes Segment
- 13, 23: Liegefläche
- 14, 24: Rückfläche
- 15, 25: Achse
- 16, 26: Lagerelement/Laufrolle
- 17, 27: Vorderfläche
- 18: Zwischenlaufrolle
- 19, 29: Seitenfläche
- 28: Schlitz
- 30: Führungselement/Laufschiene
- 31: vertikaler Teil
- 32: horizontaler Teil
- 33: gebogener Teil
- 34: zweite Laufschiene
- 35: hinterer Anschlag
- 36: vorderer Anschlag
- 37: unterer Anschlag
- 38: Doppellaufschiene
- 40: Profilleiste
- 41: Nut
- 42: Hinterschneidung
- 43 ,: modulares Element
- 43a: Abfallbehälter
- 43b: Capholder
- 43c: Ablagetisch
- 43d: Leselampe
- 43e: Sicherung gegen Herunterfallen
- 44: Verbindungsstück
- 45: Profilrahmen
- 46: Befestigungsfuß

## Patentansprüche

1. Verstellbare Liege (10; 20) mit einem ersten Segment (12; 22), das eine beliebig geformte Vorderkante (1; 3) aufweist und deren beide Seitenkanten mit der Hinterkante (2; 4) jeweils rechte Winkel bilden und mit mindestens einem im Wesentlichen rechteckigen Segment (11; 21), und jedes Segment (11, 12; 21, 22) jeweils eine Liegefläche (13; 23) aufweist, wobei jeweils zwei benachbarte Segmente (11, 12; 21, 22) entlang einer zwischen diesen verlaufenden Achse (15; 25) miteinander gelenkig verbunden sind, die Segmente (11, 12; 21, 22) in einer im Wesentlichen horizontalen Position festlegbar sind und dort eine Ebene bilden und die Segmente (11, 12; 21, 22) in eine im Wesentlichen vertikale Position verschiebbar sind, in der sie ebenfalls festlegbar sind, und mit zwei, sich gegenüberliegenden Führungselementen (30), die jeweils einen im Wesentlichen vertikalen Teil (31) und einen im Wesentlichen horizontalen Teil (32) aufweisen, wobei sie über Lagerelemente (16; 26) an den Seitenflächen (19; 29) der Segmente (11; 21) mit den Segmenten (11; 21) verbunden sind, so dass die Segmente (11; 21) senkrecht zur Achse (15; 25) auf einer vorgegebenen Bahn geführt werden,
**dadurch gekennzeichnet, dass**
der horizontale Teil (32) der Führungselemente (30) jeweils als Laufschiene ausgebildet ist und die Lagerelemente (16; 26) der Segmente (11; 21) Laufrollen oder Gleitlager sind, die in der horizontalen Position in der Laufschiene geführt werden.

2. Verstellbare Liege (10; 20) nach Anspruch 1, **dadurch gekennzeichnet, dass** eine Zwischenposition vorhanden ist, in der sich mindestens ein Segment (11; 21) in der horizontalen Position und mindestens ein Segment (11; 21) in der vertikalen Position befindet, wobei die Liege (10; 20) in dieser Zwischenposition festlegbar ist.

3. Verstellbare Liege (10; 20) nach einem der Ansprüche 1 oder 2, **dadurch gekennzeichnet, dass** der vertikale Teil (31) der Führungselemente (30) jeweils als Laufschiene ausgebildet ist und die Lagerelemente (16; 26) der Segmente (11; 21) Laufrollen oder Gleitlager sind, die in der vertikalen Position in der Laufschiene geführt werden.

4. Verstellbare Liege (10; 20) nach einem der vorstehenden Ansprüche, **dadurch gekennzeichnet, dass** jedes Führungselement (30) einstückig ausgebildet ist und zwischen horizontalem Teil (32) und vertikalem Teil (31) ein gebogener Teil (33) der Laufschiene ausgebildet ist.

5. Verstellbare Liege (10; 20) nach einem der vorstehenden Ansprüche, **dadurch gekennzeichnet, dass** jedes Segment (11; 17) an jeder dem jeweiligen Führungselement (30) zugewandten Seitenfläche (19; 29) genau ein Lagerelement (16; 26) aufweist.

6. Verstellbare Liege (10; 20) nach einem der vorstehenden Ansprüche, **dadurch gekennzeichnet, dass** zwischen zwei benachbarten Segmenten (11; 21) an jeder dem jeweiligen Führungselement (30) zugewandten Seitenfläche (19; 29) genau ein Lagerelement (16; 26) angeordnet ist.

7. Verstellbare Liege (10) nach Anspruch 6, **dadurch gekennzeichnet, dass** genau neben dem ersten Segment (12) genau noch ein weiteres Segment (11) vorhanden ist, das Führungselement (30) als eine Doppelschiene ausgebildet ist, die Laufrolle (16) des ersten Segments (12) im horizontalen Teil (32) einer Laufschiene angeordnet ist, die Laufrolle (16) des weiteren Segments (11) im vertikalen Teil (31) einer Laufschiene angeordnet ist und die beiden Teile (31, 32) stumpf aufeinander stoßen, die Zwischenlaufrolle (18) in einer durchgängigen Laufschiene gemäß Anspruch 5, die auf die andere Laufschiene aufgesetzt ist, angeordnet ist.

8. Verstellbare Liege (10) nach Anspruch 7, **dadurch gekennzeichnet, dass** die Laufrolle (16) des ersten Segments (12) in der vertikalen Position der Liege (10) am hinteren Anschlag (35) des horizontalen Teils (32) der Laufschiene anschlägt und die Laufrolle (16) des ersten Segments (12) in der horizontalen Position der Liege (10) am vorderen Anschlag (36) des horizontalen Teils (32) der Laufschiene und/oder die Laufrolle (16) des weiteren Segments (11) am unteren Anschlag (37) des vertikalen Teils (31) der Laufschiene anschlägt

9. Verstellbare Liege (10; 20) nach einem der vorstehenden Ansprüche, **dadurch gekennzeichnet dass**, die Segmente (11; 21) auf ihrer Liegefläche (13; 23) durchgängig miteinander verbunden sind, so dass eine einheitliche, durchgängige Liegefläche in der horizontalen Position gegeben ist.

10. Verstellbare Liege (10; 20) nach Anspruch 9, **dadurch gekennzeichnet, dass** die der Liegefläche (13; 23) abgewandte Rückfläche (14; 24) Schlitze (28) aufweist, die parallel zur Hinterkante (2; 4) des ersten Segments (12; 22) ausgebildet sind.

11. Verstellbare Liege (10; 20) nach einem der vorstehenden Ansprüche, **dadurch gekennzeichnet, dass** an der Vorderfläche (17; 27) des ersten Segments (12; 22) eine Nut (41) mit Hinterschneidung (42) parallel zur Achse (15; 25) ausgebildet ist.

12. Verstellbare Liege (10; 20) nach Anspruch 11, **dadurch gekennzeichnet, dass** die Nut (41) Teil einer Profilleiste (40) ist die das erste Segment (12; 22) abschließt.

13. Verstellbare Liege (10; 20) nach Anspruch 12, **dadurch gekennzeichnet, dass** die Profilleiste (40) Teil eines Profilrahmens (45), insbesondere eines Modulrahmens, ist.

14. Verstellbare Liege (10; 20) nach einem der vorstehenden Ansprüche, **dadurch gekennzeichnet, dass** die Segmente (11; 21) mit einer Seilwinde, einer Gewindespindel oder einem Kettentrieb verbunden sind.

15. Verstellbare Liege (10; 20) nach einem der vorstehenden Ansprüche, **dadurch gekennzeichnet, dass** die Segmente (11; 21) mittels eines Motors bewegbar sind.

## Claims

1. Adjustable berth (10; 20) with a first segment (12; 22) which has a front edge (1; 3) shaped as required and the two side edges of which each form right angles with the rear edge (2; 4), and with at least one substantially rectangular segment (11; 21), and every segment (11, 12; 21, 22) in each case has a lying face (13; 23), wherein in each case two adjacent segments (11, 12; 21, 22) are articulated to each other along an axis (15; 25) running between same, the segments (11, 12; 21, 22) can be fixed in a substantially horizontal position and form a plane there and the segments (11, 12; 21, 22) are displaceable into a substantially vertical position in which they can likewise be fixed, and with two opposing guide elements (30) each of which has a substantially vertical section (31) and a substantially horizontal section (32), wherein they are connected to the segments (11; 21) via bearing elements (16; 26) on the side faces (19; 29) of the segments (11; 21), with the result that the segments (11; 21) are guided on a predefined path perpendicular to the axis (15; 25),
**characterized in that**
the horizontal section (32) of the guide elements (30) is in each case formed as a slide rail and the bearing elements (16; 26) of segments (11; 21) are castors or slide bearings which are guided in the slide rail in the horizontal position.

2. Adjustable berth (10; 20) according to claim 1, **characterized in that** there is an intermediate position in which at least one segment (11; 21) is in the horizontal position and at least one segment (11; 21) in the vertical position, wherein the berth (10; 20) can be fixed in this intermediate position.

3. Adjustable berth (10; 20) according to one of claims 1 or 2, **characterized in that** the vertical section (31) of the guide elements (30) is in each case formed as a guide rail and the bearing elements (16; 26) of the segments (11; 21) are castors or slide bearings which are guided in the slide rail in the vertical position.

4. Adjustable berth (10; 20) according to one of the previous claims, **characterized in that** each guide element (30) is formed in one piece and a bent section (33) of the guide rail is formed between the horizontal section (32) and vertical section (31).

5. Adjustable berth (10; 20) according to one of the previous claims, **characterized in that** each segment (11; 17) has exactly one bearing element (16; 26) on each of the side faces (19; 29) facing the respective guide element (30).

6. Adjustable berth (10; 20) according to one of the previous claims, **characterized in that** exactly one bearing element (16; 26) is arranged on each of the side faces (19; 29) facing the respective guide element (30) between two adjacent segments (11; 21).

7. Adjustable berth (10) according to claim 6, **characterized in that** there is exactly one further segment (11) exactly beside the first segment (12), the guide element (30) is formed as a double rail, the castor (16) of the first segment (12) is arranged in the horizontal section (32) of a guide rail, the castor (16) of the further segment (11) is arranged in the vertical section (31) of a guide rail and the two sections (31; 32) are butt-jointed, the middle castor (18) is arranged in a continuous guide rail according to claim 5, which is fitted onto the other guide rail.

8. Adjustable berth (10) according to claim 7, **characterized in that** the castor (16) of the first segment (12) strikes against the rear stop (35) of the horizontal section (32) of the guide rail in the vertical position of the berth (10) and the castor (16) of the first segment (12) strikes against the front stop (36) of the horizontal section (32) of the guide rail in the horizontal position of the berth (10) and/or the castor (16) of the further segment (11) against the lower stop (37) of the vertical section (31) of the guide rail.

9. Adjustable berth (10; 20) according to one of the previous claims, **characterized in that** the segments (11; 21) are connected to each other continuously on their lying face (13; 23), with the result that there is a uniform, continuous lying face in the horizontal position.

10. Adjustable berth (10; 20) according to claim 9, **characterized in that** the rear face (14; 24) facing away from the lying face (13; 23) has slits (28) which are formed parallel to the rear edge (2; 4) of the first segment (12; 22).

11. Adjustable berth (10; 20) according to one of the previous claims, **characterized in that** on the front face (17; 27) of the first segment (12; 22) a groove (41) with undercut (42) is formed parallel to the axis (15; 25).

12. Adjustable berth (10; 20) according to claim 11, **characterized in that** the groove (41) is part of a profiled strip (40) which closes off the first segment (12; 22).

13. Adjustable berth (10; 20) according to claim 12, **characterized in that** the profile strip (40) is part of a profile frame (45), in particular of a modular frame.

14. Adjustable berth (10; 20) according to one of the previous claims, **characterized in that** the segments (11; 21) are connected to a cable winch, a threaded spindle or a chain drive.

15. Adjustable berth (10; 20) according to one of the previous claims, **characterized in that** the segments (11; 21) can be moved using a motor.

## Revendications

1. Couchette réglable (10 ; 20) avec un premier segment (12 ; 22) qui présente un bord avant (1 ; 3) formé de façon quelconque et dont les deux bords latéraux forment respectivement avec le bord arrière (2 ; 4) des angles droits et avec au moins un segment (11 ; 21) pour l'essentiel rectangulaire et chaque segment (11, 12 ; 21, 22) présentant respectivement une surface de couchette (13 ; 23), respectivement deux segments (11, 12 ; 21, 22) connexes étant reliés entre eux de façon articulée le long d'un axe (15 ; 25) s'étendant entre eux, les segments (11, 12 ; 21, 22) pouvant être immobilisés dans une position pour l'essentiel horizontale et formant à cet endroit un plan et les segments (11, 12 ; 21, 22) pouvant être déplacés dans une position pour l'essentiel verticale dans laquelle ils peuvent également être immobilisés et avec deux éléments de guidage (30) se faisant face, lesdits éléments de guidage présentant respectivement une partie (31) pour l'essentiel verticale et une partie (32) pour l'essentiel horizontale reliées aux segments (11 ; 21) par l'intermédiaire d'éléments d'appui (16 ; 26) au niveau des surfaces latérales (19 ; 29) des segments (11 ; 21), de sorte que les segments (11 ; 21) sont guidés perpendiculairement à l'axe (15 ; 25) sur une voie prédéterminée, **caractérisée en ce que** la partie horizontale (32) des éléments de guidage (30) prend respectivement la forme d'une glissière et que les éléments d'appui (16 ; 26) des segments (11 ; 21) sont des galets de roulement ou des paliers de glissement guidés dans la glissière en position horizontale.

2. Couchette réglable (10 ; 20) selon la revendication 1, **caractérisée en ce qu'**il existe une position intermédiaire dans laquelle au moins un segment (11 ; 21) se trouve dans la position horizontale et au moins un segment (11 ; 21) se trouve dans la position verticale, la couchette (10 ; 20) pouvant être immobilisée dans cette position intermédiaire.

3. Couchette réglable (10 ; 20) selon l'une quelconque des revendications 1 ou 2, **caractérisée en ce que** la partie verticale (31) des éléments de guidage (30) prend respectivement la forme d'une glissière et **en ce que** les éléments d'appui (16 ; 26) des segments (11 ; 21) sont des galets de roulement ou des paliers de glissement guidés dans la glissière en position verticale.

4. Couchette réglable (10 ; 20) selon l'une quelconque des revendications précédentes, **caractérisée en ce que** chaque élément de guidage (30) est réalisé en une seule pièce et qu'une partie incurvée (33) de la glissière est réalisée entre la partie horizontale (32) et la partie verticale (31).

5. Couchette réglable (10 ; 20) selon l'une quelconque des revendications précédentes, **caractérisée en ce que** chaque segment (11 ; 17) présente exactement un élément d'appui (16 ; 26) au niveau de chacune de ses surfaces latérales (19 ; 29) orientées vers leur élément de guidage (30) respectif.

6. Couchette réglable (10 ; 20) selon l'une quelconque des revendications précédentes, **caractérisée en ce qu'**exactement un élément d'appui (16 ; 26) est disposé entre les deux segments (11 ; 21) connexes au niveau de chaque surface latérale (19 ; 29) orientée vers leur élément de guidage (30) respectif.

7. Couchette réglable (10) selon la revendication 6, **caractérisée en ce qu'**un élément (11) supplémentaire est présent à côté du premier élément (12), que l'élément de guidage (30) prend la forme d'un double rail, que le galet de roulement (16) du premier segment (12) est disposé dans la partie horizontale (32) d'une glissière, que la glissière (16) de l'autre segment (11) est disposée dans la partie verticale (31) d'une glissière et que les deux parties (31 ; 32) se mettent bout à bout, que le galet de roulement intermédiaire (18) est disposé dans une glissière traversante selon la revendication 5 placée sur l'autre glissière.

8. Couchette réglable (10) selon la revendication 7, **caractérisée en ce que** le galet de roulement (16) du premier segment (12) bute dans la position verticale de la couchette (10) contre la butée arrière (35) de la partie horizontale (32) de la glissière et que le galet de roulement (16) du premier segment bute dans la position horizontale de la couchette (10) contre la butée avant (36) de la partie horizontale (32) de la glissière et/ou que le galet de roulement (16) de l'autre segment (11) bute contre la butée inférieure (37) de la partie verticale (31) de la glissière.

9. Couchette réglable (10 ; 20) selon l'une quelconque des revendications précédentes, **caractérisée en ce que** les segments (11 ; 21) sont reliés entre eux de façon traversante sur leur surface de couchette (13 ; 23), de sorte que l'on obtient une surface de couchette traversante unifiée en position horizontale.

10. Couchette réglable (10 ; 20) selon la revendication 9, **caractérisée en ce que** la surface arrière (14 ; 24) opposée à la surface de couchette (13 ; 23) présente des fentes (28) parallèles au bord arrière (2 ; 4) du premier segment (12 ; 22).

11. Couchette réglable (10 ; 20) selon l'une quelconque des revendications précédentes, **caractérisée en ce qu'**une rainure (41) avec des contre-dépouilles (42) est configurée parallèlement à l'axe (15 ; 25) au niveau de la surface avant (17 ; 27) du premier segment (12 ; 22).

12. Couchette réglable (10 ; 20) selon la revendication 11, **caractérisée en ce que** la rainure (41) fait partie d'une baguette profilée (40) verrouillant le premier segment (12 ; 22).

13. Couchette réglable (10 ; 20) selon la revendication 12, **caractérisée en ce que** la baguette profilée (40) fait partie d'un cadre profilé (45), notamment un cadre modulaire.

14. Couchette réglable (10 ; 20) selon l'une quelconque des revendications précédentes, **caractérisée en ce que** les segments (11 ; 21) sont reliés à une bobine de corde, une broche filetée ou une transmission par chaîne.

15. Couchette réglable (10 ; 20) selon l'une quelconque des revendications précédentes, **caractérisée en ce que** les segments (11 ; 21) peuvent être déplacés à l'aide d'un moteur.
